Europäisches Patentamt

European Patent Office

Office européen des brevets

(11) Publication number : **0 485 186 A2**

## (12) EUROPEAN PATENT APPLICATION

(21) Application number : **91310245.5**

(22) Date of filing : **05.11.91**

(51) Int. Cl.[5] : **C09J 7/02, C09J 11/00**

(30) Priority : **05.11.90 GB 9024015**

(43) Date of publication of application :
**13.05.92 Bulletin 92/20**

(84) Designated Contracting States :
**DE FR GB**

(71) Applicant : **ALLIED COLLOIDS LIMITED**
**P.O. Box 38 Low Moor**
**Bradford West Yorkshire, BD12 0JZ (GB)**

(72) Inventor : **Clarke, John Bernard**
**10 Smithy Lane, Wilsden**
**Bradford, West Yorkshire BD15 0EG (GB)**
Inventor : **Couldwell, Pauline Lesley**
**34 Mill Street, Birstall**
**Batley, West Yorkshire (GB)**
Inventor : **Langley, John Graham**
**Manderley, Thorpe Lane, Guiseley,**
**Leeds, West Yorkshire (GB)**

(74) Representative : **Lawrence, Peter Robin**
**Broughton et al**
**GILL JENNINGS & EVERY 53-64 Chancery**
**Lane**
**London WC2A 1HN (GB)**

(54) **Adhesives for prepasted wallcoverings.**

(57)    The invention relates to a prepasted wallcovering and a prepaste composition, and a process for making a prepasted wallcovering.
    A prepasted wallcovering comprises a substrate carrying a dry prepaste coating that comprises adhesive polymer and a coating modifier that has a softening point of at least 80°C, that is substantially free of hydrophobic groups and that is present as a film that inhibits moisture pick-up by the coating.

EP 0 485 186 A2

Jouve, 18, rue Saint-Denis, 75001 PARIS

Prepasted wallcoverings comprise a substrate carrying a dry prepaste coating that is adhesive when wet. One way of forming a prepaste coating is by dusting dry, potentially adhesive powder on to wet substrate. Another way is by coating the substrate sequentially with an alkali swellable emulsion polymer and, after drying this, with alkali.

A very successful commercial process is described in U.S. 4,361,452. In this, a reverse phase dispersion of a prepaste composition in a volatile non-aqueous liquid is spread on to the substrate and the volatile liquid, and any water in the prepaste, is evaporated to leave a dry prepaste coating. The coating is in the form of water insoluble particles of cross linked synthetic polymer. It is stated that a binder that is soluble in the non-aqueous liquid may be included to increase bonding of the coating to the substrate. Emulsifier and stabiliser are included in the non-aqueous phase to facilitate the formation and maintenance of the reverse phase dispersion.

Stabilisers for reverse phase dispersions traditionally are polymers that have hydrophobic groups (such that the polymer is soluble or readily dispersible in the non-aqueous liquid) and hydrophilic groups (such that the polymer is attracted to and stabilises the aqueous phase of the dispersion).

In U.S. 4,713,264 it is explained that reverse phase dispersions of this type can result in embossing rolls and other handling apparatus becoming contaminated with adhesive, and to minimise this problem a stabiliser is used that is an oil at 25°C, in contrast to the waxy solids typically used as reverse phase dispersion stabilisers. Thus the prepaste is modified by reducing the softening point of the stabiliser.

Although prepastes in which some or all of the stabiliser is an oil have been very successful, they are still liable to suffer from the disadvantage of contamination of handling apparatus. For instance path rollers over which the dry prepasted coating may travel during the overall process of producing a printed, and optionally embossed, wallcovering may become contaminated with adhesive. Also, embossing and reeling equipment may become contaminated, for instance during conversion from a jumbo reel to a sales reel. Also, blocking or pick-off may occur at the edges or elsewhere in a reel, that is to say the prepaste on the reverse of one layer of substrate may tend to bond, in the reel, to the decorative phase of the adjacent layer of substrate.

Another difficulty that can arise is that the polymer of the prepaste is normally formulated to give rapid uptake of water, but it is important that the polymer does not take up too much water if it is immersed for too long, as otherwise the adhesive properties are then too dependent upon the duration of wetting. The use of a counterionic blend of polymers is one way of minimising this problem, as described in U.S. 4,476,190.

Although U.S. 4,361,452 did mention the possibility of using a binder that is soluble in the non-aqueous phase, no binder that is useful for solving any or all of these problems has previously been proposed. Indeed, the polymeric stabiliser used in U.S. 4,361,452 tends to act as a binder and, as indicated in U.S. 4,713,264 it was subsequently found to be desirable to replace this waxy stabiliser with a liquid stabiliser.

The described problems of contamination of the apparatus and blocking and pick-off within the reel apply also with other types of prepasted wallcoverings, such as those made by the other methods discussed above, and it would be desirable to be able to modify prepasted wallcoverings so as to minimise or eliminate these problems.

A prepasted wallcovering according to the invention comprises a substrate carrying a dry prepaste coating that is formed of

50 to 97% by weight water soluble or water swellable adhesive polymer or polymer blend and

3 to 50% by weight of other material selected from emulsifiers, dispersion stabilisers, extenders and coating modifiers and that includes 3 to 30% by weight of a coating modifier that is insoluble and non-swellable in water, that has a softening point of at least 80°C, that is substantially free of hydrophilic groups and that is present as a film that inhibits moisture pick-up by the coating.

A prepaste composition according to the invention is a reverse phase dispersion in a volatile non-aqueous liquid of a prepaste that contains, on a non-aqueous basis,

50 to 97% by weight water soluble or water swellable adhesive polymer or polymer blend, and

3 to 50% by weight other material selected from emulsifiers, dispersion stabilisers, extenders and coating modifiers and that includes 3 to 30% by weight of coating modifier that is a resinous material that is insoluble and non-swellable in water, that has a softening point of at least 80°C, that is substantially free of hydrophilic groups and that is present as a solution or dispersion in a non-aqueous liquid and that, upon evaporating the non-aqueous liquid and any water in the composition from the coating of the composition on a substrate, forms a film on the resultant dry coating that inhibits moisture pick-up by the dry coating.

The defined prepasted wallcovering can be made by applying the defined resinous coating modifier over a prepaste coating that is being formed or that has already been formed. For instance the resinous material, generally as a solution in a non-aqueous liquid, may be sprayed or otherwise applied over a prepaste coating either during, near the end of, or after its manufacture, for instance before drying of a wet prepaste coating. Preferably however the defined prepasted wallcovering is formed by applying the defined reverse phase dispersion as a coating on the back of the substrate and then evaporating the non-aqueous liquid and any water from the coating so as to form the dry prepaste coating with the film of water-inhibiting resinous material over it.

The resinous material appears to perform two functions. One function is to promote the bonding of the adhesive polymer or polymer blend to the substrate, so as to minimise dusting.

Another function is to inhibit moisture pick-up by the prepaste coating. The water soluble or water swellable adhesive polymer or polymer blend is highly absorbent to water. Conventional stabilisers in reverse phase dispersions contain both hydrophobic and hydrophilic groups. The presence of the hydrophilic groups means that these stabilisers also inevitably have some receptiveness for water and so the extent to which conventional dispersion stabilisers inhibit moisture pick-up is relatively low. In the invention, however, the resinous material is substantially free of hydrophilic groups and thus it is much more effective at inhibiting moisture pickup.

Although U.S. 4,713,264 recommended the use of a stabiliser having a reduced softening point, to minimise dusting and contamination problems, in the invention we find that it is, in fact, necessary for the defined coating modifier to have a relatively high softening point. Normally it is at least about 100°C and preferably it is at least about 130°C. For instance it can be up to about 150 or 170°C or even higher in some instances.

The invention is based in part on the discovery that, despite the need for rapid pick-up of water during soaking, it would be deisrable and possible to reduce pick-up of moisture during manufacture and storage without impairing final absorption properties and that improved final absorption properties can be obtained. It is also based in part on the discovery that polymer in the organic phase should have high a rather than a low, softening point.

Sufficient of the defined coating modifier must be present for the final prepaste coating to have sufficient of the modifier on its upper surface, and elsewhere, to achieve the desired results. Generally the amount is at least about 5% and frequently it is at least about 7 or 8% by weight of the dry prepaste.

If the amount is too high, it may interfere with the adhesive properties of the prepaste and may interfere unacceptably with the pick-up of water by the prepaste during soaking, and so generally the amount is below 25% and is usually below 20% by weight of the prepaste, (i.e., the dry coating weight). Amounts of around 10 to 15% are often preferred.

Although we state that the coating modifier is present as a film, the film may be discontinuous over the prepaste coating. When, as is preferred, the prepaste coating is particulate, preferably most or all of the particles are each covered by a film of the modifier and may be enclosed within a film. All such film or films may be discontinuous provided that the overall effect is to achieve the desired bonding of the prepaste and inhibition in moisture pick-up when exposed to humidity or accidental moistening, while permitting proper absorption of water when the prepaste is soaked before use.

The described coating material can be any hydrophobic polymeric material that is substantially free of hydrophilic groups and that can be applied from solution or dispersion in the non-aqueous liquid to form the desired film, and so can be formed from a variety of hydrophobic materials. Preferably the materials are substantially entirely of hydrocarbon and the preferred modifiers for use in the invention are hydrocarbon resins which are soluble or swellable in the non-aqueous liquid.

The remainder of the prepaste coating is formed from water soluble or water swellable adhesive polymer or polymer blend and other conventional additives such as emulsifiers, dispersion stabilisers, extenders and other coating modifiers, for instance to adjust the rheology of the coating. Generally the composition does not contain any coating modifier other than the defined resinous material and generally it does not contain any extenders or other diluents. However it does usually contain one or more emulsifiers and dispersion stabilisers generally in a total amount of 2 to 30%, often 3 to 20%, by weight of the prepaste coating.

If the prepaste is made from a reverse phase emulsion, then the prepaste may contain a relatively high amount of water-in-oil emulsifier, for instance 5 to 20% (based on dry coating weight). However it is often preferred for the composition to contain both emulsifier and dispersion stabiliser. Each is generally present in an amount of at least about 1%, often about 2 or 3% and each is generally present in an amount of not more than about 10%, often about 7% (based on dry coating weight). A typical emulsifier is sorbitan mono-oleate. Suitable dispersion stabilisers are polymers containing both hydrophilic and hydrophobic groups, for instance any of the waxy or oily polymers mentioned in U.S. 4,713,264.

The water soluble or water swellable adhesive polymer or polymer blend normally provides at least 67% and often at least 75% by weight of the prepaste coating, often around 80 to 90% by weight of the coating. When the prepaste is made by dusting, the polymer can be a natural polymer such as starch but generally it is preferred for the polymer to be a synthetic polymer formed by polymerisation of a water soluble ethylenically unsaturated monomer or monomer blend, generally as a reverse phase dispersion. It is generally preferred for the polymer to be ionic and thus it should be formed from ionic monomer or from a blend of ionic and non-ionic monomer. The polymer can be anionic or cationic, or a blend of anionic and cationic polymers can be used. Suitable monomers are those mentioned in U.S. 4,361,452, 4,713,264 and 4,476,190.

Anionic polymers are generally present as alkali metal or ammonium salts, preferably sodium acrylate polymers often copolymerised with acrylamide.

The polymer is present in the dispersion as particles typically having a size of from 0.01 to 10µm although in some instances higher particle sizes, e.g., up to 30µm, can be used.

The polymer may retain this particulate form in the prepasted wallcovering, although the existence of these particles may be difficult to observe optically because the film of coating modifier, and possibly dispersion stabiliser, may be apparent in the prepaste coating.

When the dry prepaste coating is wetted with water, it can be satisfactory for the adhesive polymer to go into true solution but this generally gives a rather poor rheology to the prepaste and so it is better for the polymer to be water swellable upon rewetting, rather than water soluble. For this purpose the polymer is preferably cross linked by the time it is rewetted. This can be achieved by cross linking through, for instance, carboxylic groups in the polymer. One way of achieving this is by including counter-ions in the prepaste coating. These can be, for instance, polyvalent metal ions such as iron or aluminium (present normally as soluble salts) or they can be counter-ions of a counterionic polymer. For instance anionic and cationic polymers will interact to form a complex that can be regarded as a cross-linked polymer.

Generally it is more reliable, however, to achieve the desired cross linking by including cross linking agent in the original monomer or monomer blend from which the polymer is made, for instance as is described and exemplified in U.S. 4,361,452.

Conventional volatile non-aqueous liquids can be used as the continuous phase of the reverse phase dispersion. The particles in the dispersion can be aqueous polymer particles in which the amount of water is typically from 0.5 to 1.5 parts per part of the adhesive polymer or polymer blend but it is often preferred for the reverse phase dispersion to be distilled so as to remove most or all of the water. The amount of volatile non-equeous liquid in the reverse phase dispersion is generally from 0.5 to 1.5 parts by weight per part by weight of the prepaste coating materials on a non-aqueous, i.e., dry, basis.

The reverse phase dispersion can be made in conventional manner and the defined coating modifier can be dissolved or dispersed into the non-aqueous liquid either before or, more usually, after polymerisation.

The reverse phase dispersion or other prepaste composition can be applied to the substrate in conventional manner at conventional coating weights, typically 3 to 10, often around 5 to 8, grams prepaste per square metre.

The invention gives a number of advantages. It is possible substantially to eliminate dusting. Contamination of embossing equipment, even when run hot and of other handling apparatus, is minimised. Condensation of moisture on path rollers causes little or no activation of the prepaste and consequentially little or no risk of adhesion of the wallcovering to the path rollers. Migration of humid air into the edges of a reel or into contact with the prepaste during winding or other processing causes little or no activation of the prepaste, and thus minimises blocking or pick-off.

When the prepaste is soaked in water there can be a small, but acceptable, decrease in pick-up initially, e.g., in the first 30 seconds, and a desirable reduction in pickup upon prolonged soaking (e.g., 2 minutes).

The following are some examples:

A basic prepaste composition is formed by reverse phase polymerisation of acrylamide, sodium acrylate and methylene bis acrylamide ,in conventional manner, for instance as in U.S. 4,361,452, in the presence of about 3% (based on monomer) sorbitan mono-oleate emulsifier and about 5% of a polymeric stabiliser having hydrophilic and hydrophobic groups, such as a blend of the solid and oily stabilisers described in U.S. 4,713,264. After polymerisation in conventional manner, water is evaporated from the composition to form a reverse phase dispersion consisting of approximately equal amounts by weight of volatile non-aqueous liquid and prepaste composition.

Different amounts of different hydrocarbon resins are dissolved into the composition, as set out below, and the composition is then coated at the dry coating weight quoted below on to the reverse face of a wallcovering substrate. The non-aqueous liquid is evaporated and the wallcovering can then be subjected to conventional handling and reeling and manufacturing processes.

The water pick-up and transfer values for the wallcoverings are determined.

Water pick-up is measured by soaking the sample for a specified period (30 seconds, 60 seconds or 120 seconds) followed by 15 seconds vertical drainage, followed by weighing the sample to determine the increase in weight.

Transfer value is determined on a laboratory sample of the wallcovering by coating the reverse phase dispersion on to the substrate, drying in a wind tunnel at 85°C for 45 seconds, placing black card on to the pasted side and pressing this over a 1 inch width with a 1.8kg weight and pulling the black card along the prepaste, and then visually assessing the amount of transfer of prepaste to the black card. The result is quoted on a scale of zero to 5, where zero indicates no transfer of paste (i.e., excellent properties) and 5 indicates a significant transfer of paste.

In the following table, hydrocarbon resin A is the material sold under the trade name Hercurez C and has softening point of 100°C, while hydrocarbon resin B is the material sold under the trade name Petrorez 140 and has softening point of 140°C.

The results are set out in the following table from which it is apparent that both give a useful reduction in water pick-up, the higher softening point resin gives the best reduction in transfer, but that the lower softening point resin also gives a useful reduction in transfer when used in sufficient amount.

| Prepaste weight $(g/m^2)$ | Hydrocarbon Resin and amount | Transfer Value | Water Pick-up $(g/m^2)$ after soaking for | | |
|---|---|---|---|---|---|
| | | | 30s | 60s | 120s |
| 6.5 | - | 5 | 360 | 510 | 650 |
| 6.5 | 10% A | 4 | 350 | 460 | 600 |
| 6.5 | 15% A | 3 | 350 | 460 | 580 |
| 5 | - | 5 | 370 | 440 | 540 |
| 5 | 10% B | 0-1 | 350 | 420 | 450 |

## Claims

1. A prepasted wallcovering comprising a substrate carrying a dry prepaste coating that is formed of
   50 to 97% by weight water soluble or water swellable adhesive polymer or polymer blend and
   3 to 50% by weight of other material selected from emulsifiers, dispersion stabilisers, extenders and coating modifiers and that includes 3 to 30% by weight of a coating modifier that is insoluble and non-swellable in water, that has a softening point of at least 80°C, that is substantially free of hydrophilic groups and that is present as a film that inhibits moisture pick-up by the coating.

2. A wallcovering according to claim 1 wherein the coating modifier has a softening point of at least 100°C, and preferably at least 130°C.

3. A wallcovering according to claim 1 or claim 2 wherein the coating modifier consists substantially entirely of hydrocarbon.

4. A wallcovering according to claim 1 or claim 2 wherein the coating modifier consists of a hydrocarbon resin.

5. A wallcovering according to any preceding claim wherein the film of coating modifier is discontinuous over the prepaste coating.

6. A wallcovering according to any preceding claim wherein the amount of coating modifier in the dry prepaste coating is from 7 to 25%, and preferably from 10 to 15% by weight of the dry prepaste.

7. A wallcovering according to any preceding claim wherein the adhesive polymer is a synthetic polymer formed as a reverse phase dispersion of a water-soluble, ethylenically saturated monomer or monomer blend.

8. A wallcovering according to claim 7 wherein the polymer is a cross-linked polymer formed from ionic monomer or monomer blend, or from a blend of ionic and non-ionic monomer.

9. A prepaste composition comprising a reverse phase dispersion in a volatile non-aqueous liquid of a prepaste that contains, on a non-aqueous basis,
   50 to 97% by weight water soluble or water swellable adhesive polymer or polymer blend, and
   3 to 50% by weight other material selected from emulsifiers, dispersion stabilisers, extenders and coating modifiers and that includes 3 to 30% by weight of coating modifier that is a resinous material that is insoluble and non-swellable in water, that has a softening point of at least 80°C, that is substantially free of hydrophilic groups and that is present as a solution or dispersion in a non-aqueous liquid and that, upon evaporating the non-aqueous liquid and any water in the composition from the coating of the composition on a substrate, forms a film on the resultant dry coating that inhibits moisture pick-up by the dry coating.

10. A process of manufacturing a prepasted wallcovering comprising

applying 3 to 10 grammes of prepaste composition as defined in claim 9 per square metre of substrate to form a coating,

evaporating the non-aqueous liquid and any water in the prepaste composition from the coating on the substrate to form a film of coating modifier on the resultant dry prepasted coating.

11. A process of manufacturing a prepasted wallcovering according to any of claims 1 to 8 comprising applying the coating modifier over a prepaste coating that is being formed or that is already being formed.

12. A process according to claim 11 wherein a solution of a coating modifier in a non-aqueous liquid is sprayed over a prepaste coating either during, near the end of, or after the manufacture of that prepaste coating.